# EUROPEAN PATENT SPECIFICATION

(11) **EP 1 842 258 B1**
(45) Date of publication and mention of the grant of the patent: **03.08.2011**
(21) Application number: 04815369.6
(22) Date of filing: 22.12.2004
(51) Int. Cl.: H01M 8/08, H01M 4/86, H01M 8/02, H01M 8/10

(54) **FUEL CELL WITH ELECTROLYTE CONDENSATION ZONE**
BRENNSTOFFZELLE MIT ELEKTROLYTKONDENSATIONSZONE
PILE A COMBUSTIBLE A ZONE DE CONDENSATION D'ELECTROLYTE

(43) Date of publication of application: 10.10.2007
(73) Proprietor: UTC Power Corporation, South Windsor, CT 06074 (US)
(72) Inventor: BREAULT, Richard, D., North Kingstown, RI 02852 (US); FREDLEY, Robert, R., Tolland, CT 06084 (US)
(74) Representative: Klunker . Schmitt-Nilson . Hirsch
(86) International application number: PCT/US2004/043284
(87) International publication number: WO 2006/071209

(56) References cited:
- JP-A- 60 189 869
- US-A- 4 414 291
- US-A- 4 652 502
- US-A- 4 755 439
- US-A- 4 786 568
- US-A- 4 978 591
- US-A- 5 173 373
- US-A- 5 270 132
- US-B1- 6 352 742

## Description

### Technical Field

This invention relates to fuel cells, and more particularly to fuel cells having a liquid electrolyte and an electrolyte condensation zone.

### Background Art

In fuel cells that use a liquid electrolyte, there is some evaporation of the electrolyte into the reactant gas streams as they pass through the cell, particularly into the air (oxidant) stream, which can flow at a higher rate than the hydrogen (fuel) stream. Although the evaporation is slight, it may become significant over a long period of time and may eventually cause the cell to fail due to an electrolyte shortage within the cell. Thus, for extended periods of operation it may be necessary to recover the lost electrolyte and return it to the cell. Electrolyte condensation zones of the type described in US Patent 4,345,008, issued on August 17, 1982 to Breault, can be used to recover electrolyte that has evaporated into a reactant stream. The 4,345,008 patent describes a phosphoric acid fuel cell, and the electrolyte condensation zone is thus referred to as an acid condensation zone. The acid condensation zone is a non-reactive portion of an electrode near a reactant outlet. The non-reactive area does not support the fuel cell electrochemical reaction, and is thus cooler than the catalyzed, electrochemically active portions of the electrode. The condensation zone is cool enough for evaporated electrolyte to condense out of the reactant stream so that it can be recovered before exiting the fuel cell. It has been discovered that fuel cells having electrolyte condensation zones may be subject to corrosion and degradation in the areas of edge seals.

### Disclosure of the Invention

A fuel cell (12) comprising: an electrolyte; a cathode electrode (28) and an anode electrode (26); a cathode catalyst layer (36) and an anode catalyst layer (30); an electrolyte condensation zone (58) adjacent at least one reactant exit (59), operable to condense out electrolyte, that has evaporated into the reactant stream, for absorption back into the fuel cell; and at least one coolant channel (18); wherein an end (54) of the anode catalyst layer (30) is from 1.8 to 3.6 cm from an outer edge (48) of the fuel cell (12); an end (56) of a cathode catalyst layer (36) is from 5.1 to 12.7 cm from the outer edge (48) of the fuel cell (12); the electrolyte condensation zone (58) is comprised of the area extending from the end (56) of the cathode catalyst layer (36) to the outer edge (48) of the fuel cell (12); and the at least one coolant channel (18) has the coolant entrance adjacent the electrolyte condensation zone (58).

A method of operating a fuel cell stack assembly (10) having at least one fuel cell (12) and containing an electrolyte, comprising: flowing an oxidant through a cathode flow field plate (40) adjacent to a cathode electrode (28), the cathode electrode having a cathode catalyst layer (36) comprising an end (56), and having an electrolyte condensation zone (58) adjacent at least one reactant exit (59), which is comprised of the area extending from the end (56) of the cathode catalyst layer (36) to the outer edge (48) of the fuel cell (12), wherein the end (56) of the cathode catalyst layer (36) is from 5.1 to 12.7 cm from the outer edge (48) of the fuel cell (12); flowing a fuel through an anode flow field plate (32) adjacent to an anode electrode (26) having an anode catalyst layer (30), the anode catalyst layer having an end (54) coincident with a wet seal inner edge (53) of the fuel cell, or extending as much as half way across the edge seal, wherein the end (54) of the anode catalyst layer (30) is from 1.8 to 3.6 cm from the outer edge (48) of the fuel cell (12); flowing a coolant through at least one coolant channel (18) in the fuel cell stack assembly (10), wherein the coolant enters the fuel cell stack assembly (10) adjacent the electrolyte condensation zone (58); and condensing out electrolyte that has evaporated into the reactant stream at the electrolyte condensation zone (58).

A grater number of coolant tubes can be adjacent the condensation zone than adjacent the reactive portions of the fuel cell.

### Brief Description of the Drawing

FIG. 1 is a cross section of a portion of a phosphoric acid fuel cell stack having an acid condensation zone known in the prior art;
FIG. 2 is a cross section of a portion of a phosphoric acid fuel cell stack having an improved acid condensation zone;
FIG. 3 is a chart illustrating the relationship between distance and potential in the embodiment of FIG. 1; and
FIG. 4 is a chart illustrating the relationship between distance and potential in the embodiment of FIG 2.

### Best Mode for Carrying Out the Invention

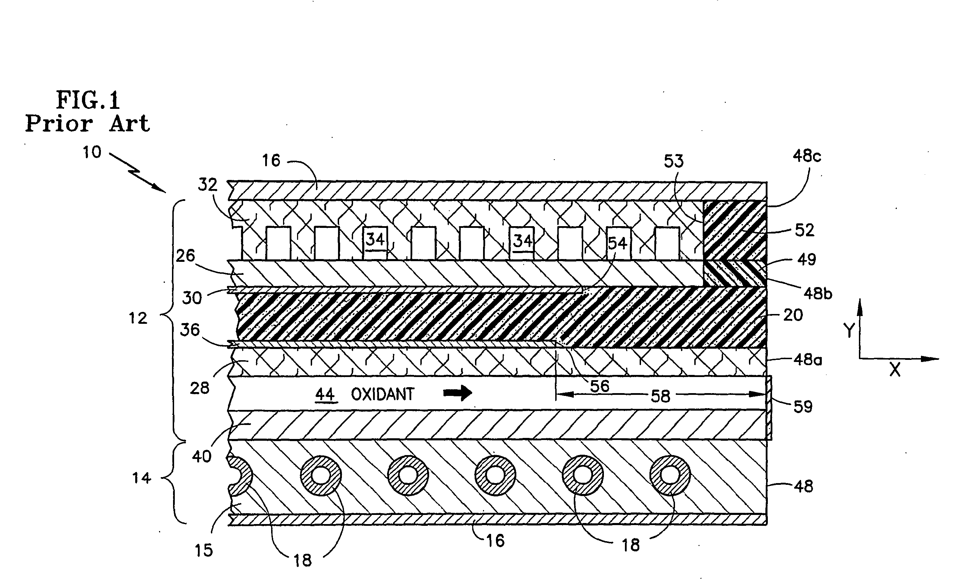

FIG. 1 is a cross-sectional view of part of a fuel cell stack **10** made up of fuel cells **12**, coolant holder assemblies **14**, and gas impervious separator plates **16**. The stack components have constructions known to those skilled in the art and are arranged relative to each other in a manner known to those skilled in the art. A holder layer **15** of the coolant holder assembly can hold a plurality of coolant passages such as tubes or channels **18** that carry coolant through the stack to withdraw the heat generated by the electrochemical reaction within the fuel cell stack. Each cell **12** includes an electrolyte retaining matrix layer **20** having an anode or fuel electrode **26** disposed on one side and a cathode or oxidant electrode **28** disposed on the other side. The electrolyte can be phosphoric acid and the matrix layer **20** can be silicon carbide with a binder such as polytetrafluoroethylene.

The anode and cathode electrodes can each be of a gas diffusion type, wherein each electrode comprises a fibrous, gas porous carbon substrate, which may be made in any manner known to those skilled in the art. The anode substrate **26** has a catalyst layer **30** facing the electrolyte matrix **20**. An anode flow field plate **32** has a plurality of parallel fuel channels **34**, can interconnect a fuel inlet manifold (not shown) on one side of the stack with a fuel outlet manifold (not shown) on the other side. The fuel flow field can be a single pass or a multi pass flow field.

The cathode electrodes **28** are similar in construction to the anode electrodes **26**. The cathode electrode **28** has a thin layer of catalyst **36** is on the flat surface of the substrate facing the electrolyte matrix **20** The catalyzed areas of the anode and cathode support the fuel cell electrochemical reaction and are oftentimes referred to as the electrochemically active area. The cathode flow field plate **40** has oxidant channels **44** for carrying the oxidant across the cells in a direction perpendicular to the fuel flow. Both catalyst layers **30** and **36** stop short of the outer edge of the fuel cell **48**.

An edge seal **49** is impregnated into the anode electrode **26**. An edge seal **52** is also included in the anode flow field plate **32**. The edge seals can be substantially the same width and have inner edge **53**. The edge seals are typically 1.8 cm to 3.6 cm (.7 in -1.4 in) wide. The anode flow field plate can be a porous electrolyte reservoir that is known to those skilled in the art. The same or similar seals can exist elsewhere in the fuel cell, with their locations being known to those skilled in the art, and are therefore omitted for clarity. An example of an edge seal that can be used in this embodiment is a wet seal as described in US Patent 4,652,502, issued to Breault on March 24, 1987. In the 4,652,502 patent, the edge seal is formed by impregnating particles such as carbon and silicon dioxide into the porous structure at the fuel cell edge, so as to reduce the pore sizes and increase capillary forces in the edge seal area. Thus, when phosphoric acid fills the pores in the edge seal there is sufficient capillary force to retain the acid in the seal and form the wet seal.

The anode catalyst layer **30** and cathode catalyst layer **36** terminate at catalyst ends **54** and **56**, respectively. The length along the x-axis between the cathode catalyst end **56** and the wet seal inner edge **53** can be about 5.1cm to 12.7 cm (2 to 5 inches). The fuel cell's electrochemical reaction does not take place across this length, nor does it take place in the area of the wet seal, due to the absence of catalyst, and thus it is cooler than the electrochemically active portions of the cell. This cooler section is a condensation zone **58** that extends from an end **56** to the outer edge of the fuel cell, and it is placed at the oxidant outlet **59** so that electrolyte that has evaporated into the reactant stream can condense out for absorption back into the fuel cell.

It has been discovered that the combination of wet seals with acid condensation zones can promote carbon corrosion at or near the outer edge **48a** of the cathode substrate. It is believed that the cause of the carbon corrosion is an increased difference in potential between the electronic conducting phase and the electrolyte. The difference in potential is caused by the reduction of oxygen at the outer edges **48b** and **48c** that creates a demand for protons generated at anode catalyst end **54**. The in-plane flow of protons from the catalyst end to the outer edges of the wet seals increases the difference in potential between the electronic conducting phase and the electrolyte and results in more rapid corrosion at the outer edge **48a** of the cathode substrate.

Oxygen can be reduced at the outer edge of the anode electrode when materials capable of reducing oxygen are found in the presence of oxygen, the phosphoric acid electrolyte, and a low potential. This situation exists at outer edges **48b** and **48c** on the anode electrode and flow field because the edge is exposed to oxygen (i.e. air), the wet seal particulate filler is carbon, which is capable of reducing oxygen, and phosphoric acid fills the pores in the wet seal.

As an alternative to using carbon to form the wet seals, materials that do not reduce oxygen can be used. Examples of such materials include, for example, tungsten oxide, silicon carbide, and mixtures thereof. Use of these materials will inhibit or eliminate the reduction of oxygen relative to an embodiment with carbon in the wet seal, which will result in a lower amount of carbon corrosion. In an alternative embodiment, the wet seal can be replaced with a solid edge seal, made with a material such as, for example, a polymer or a graphite polymeric composite. The use of a solid edge seal will also decrease or eliminate the reduction of oxygen, since it prevents the phosphoric acid from entering the edge seal area, and thus serves to reduce corrosion relative to using a wet seal.

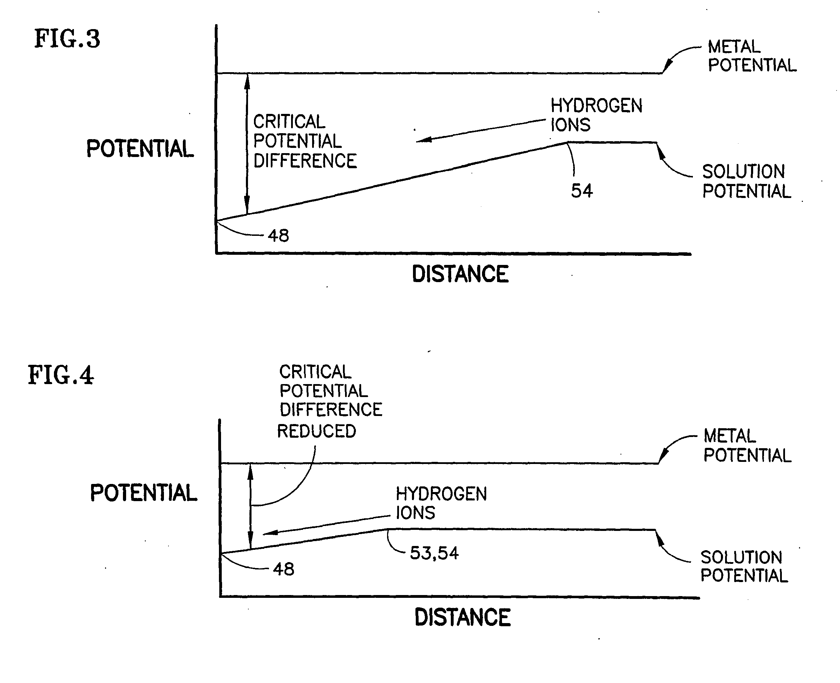

For a given reaction rate at the outer edges **48b and 48c** of the seal, the difference in potential is governed by Ohm's law, where the difference in solution potential between edges **48b** and **48c**, and the catalyst end **54**, is dependent on the oxygen reduction current at these edges, and the distance between these edges and the catalyst end **54**. The relationship between distance and potential for the embodiment of FIG.1 is shown graphically in FIG. 3. FIG. 3 illustrates how the difference in potential increases with increased distance from the catalyst end **54**, reaching its maximum at the wet set seal outer edges **48b** and **48c**, when the ends of both catalyst layers are 5.1 cm to 12.7 cm (2 inches to 5 inches) from seal inner edge **53**. Note that in FIG. 3, the condensation zone **58** is on the left side of the graph, whereas it is shown on the right side of the embodiment in FIG. 1.

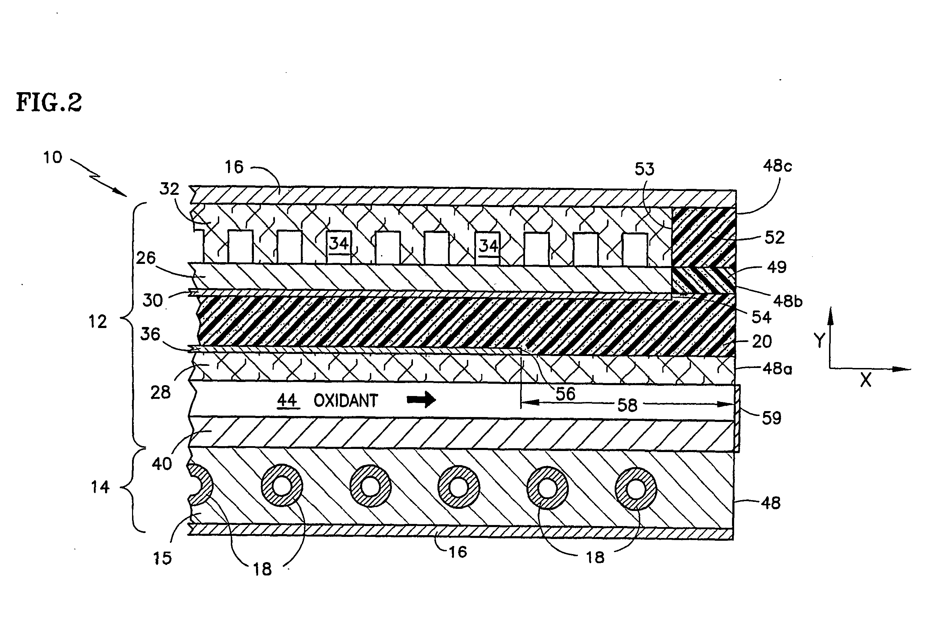

FIG. 2 shows an embodiment similar to FIG. 1 with a different configuration of anode catalyst **30**. In this embodiment the anode catalyst **30** stretches in the x-direction across the length of the non-reactive condensation zone 58 on the cathode electrode and has an end **54** that is substantially coincident with wet seal inner edge **53**. The term substantially coincident includes structures where the catalyst end **54** extends as much as about halfway across the edge seal. The length of the electrochemically inactive acid condensation zone **58**, measured along the x-axis from the cathode catalyst end **56** to the outer edge **48** of the fuel cell, is the same as that in the embodiment of FIG.1. However, relative to FIG. 1, the distance between the outer edge **48** and the anode catalyst end **54** is greatly reduced. This reduces the ionic resistance relative to the embodiment shown in FIG.1. As shown in FIG. 2, the distance can be reduced to substantially the width of the edge seals **49** and **52**. The relationship between distance and potential for this embodiment is shown in FIG 4. Note that in FIG. 4, the acid condensation zone **58** is on the left side of the graph, whereas it is shown on the right side of the embodiment in FIG. 2.

FIG. 3 shows the metal and solution potential as a function of position for the prior art cell configuration shown in FIG. 1. The end of the anode catalyst **54** in FIG. 1 is typically about 10 cm (3.9 in) from the edge of the cell. FIG. 4 shows the metal and solution potential as a function of position for the embodiment shown in FIG. 2. The end of the anode catalyst **54** in the FIG. 2 embodiment is typically about 1.8 cm (.7 in) from the edge of the cell. The resultant slope of solution potential versus position is about 18 times lower for the embodiment in FIG. 2 than for the prior art. This reduction in the potential difference between the metal and solution results in a substantially lower corrosion rate on the cathode at locations 48a and 59 for the embodiment of FIG. 2 when compared with the embodiment of FIG. 1.

There is an emerging technology of high temperature polymer electrolyte membranes. US 2004/0028976A1 describes a modified polybenzimidazole (PBI). Additional phosphoric acid or polyphosphoric acid, free acids, may be added to fuel cells that incorporate these high temperature polymer electrolyte membranes to enhance their electrochemical performance or to enhance their life. This invention may be used to condense such electrolytes as well as phosphoric acid.

During operation of the stack **10** a fuel such as hydrogen gas passes adjacent to the anode electrode **26** through the channels **34** and comes into contact with the catalyst layer **30** and the phosphoric acid within the matrix **20** through the open pores in the material of the anode electrode. Simultaneously, but in a direction perpendicular thereto, air as the oxidant enters the channels **44** from a manifold on one side of the stack **10** and travels adjacent the cathode electrode **28** and into contact with the catalyst layer **36** and the electrolyte within the matrix **20** via the open pores in the cathode electrode **28**. Electricity, heat, and water are produced by the electrochemical reaction in the cells, as is well known in the art.

Although the vapor pressure of phosphoric acid in air, at operating temperatures on the order of about 177-204 degrees C (350 - 400.degree. F) is very low, a small quantity of phosphoric acid evaporates into both the flowing air and hydrogen streams as they travel through the cells. As the air stream passes through the oxidant channels **44** adjacent the condensation zone **58** its temperature begins to drop due to the lack of an electrochemical reaction in the condensation zone. If necessary or desirable, the temperature can be further reduced by flowing a greater amount of cooling fluid per square inch near the condensation zone **50** in the coolant passages **18** than is flowing in proximity to the active portions of the cells. This can be accomplished, for example, by having a greater concentration of coolant channels adjacent the condensation zone than the concentration of coolant channels adjacent the elctrochemically active area.

## Claims

1. A fuel cell (12) comprising:
an electrolyte;
a cathode electrode (28) and an anode electrode (26);
a cathode catalyst layer (36) and an anode catalyst layer (30);
an electrolyte condensation zone (58) adjacent at least one reactant exit (59), operable to condense out electrolyte, that has evaporated into the reactant stream, for absorption back into the fuel cell; and
at least one coolant channel (18);
wherein
an end (54) of the anode catalyst layer (30) is from 1.8 to 3.6 cm from an outer edge (48) of the fuel cell (12);
an end (56) of a cathode catalyst layer (36) is from 5.1 to 12.7 cm from the outer edge (48) of the fuel cell (12);
the electrolyte condensation zone (58) is comprised of the area extending from the end (56) of the cathode catalyst layer (36) to the outer edge (48) of the fuel cell (12); and
the at least one coolant channel (18) has the coolant entrance adjacent the electrolyte condensation zone (58).

2. The fuel cell according the claim 1 wherein the electrolyte is phosphoric acid.

3. The fuel cell according to claim 1 wherein the electrolyte is a free acid contained within a fuel cell having a high temperature electrolyte membrane (20).

4. A method of operating a fuel cell stack assembly (10) having at least one fuel cell (12) and containing an electrolyte, comprising:
flowing an oxidant through a cathode flow field plate (40) adjacent to a cathode electrode (28), the cathode electrode having a cathode catalyst layer (36) comprising an end (56), and having an electrolyte condensation zone (58) adjacent at least one reactant exit (59), which is comprised of the area extending from the end (56) of the cathode catalyst layer (36) to the outer edge (48) of the fuel cell (12), wherein the end (56) of the cathode catalyst layer (36) is from 5.1 to 12.7 cm from the outer edge (48) of the fuel cell (12);
flowing a fuel through an anode flow field plate (32) adjacent to an anode electrode (26) having an anode catalyst layer (30), the anode catalyst layer having an end (54) coincident with a wet seal inner edge (53) of the fuel cell,
or extending as much as half way across the edge seal, wherein the end (54) of the anode catalyst layer (30) is from 1.8 to 3.6 cm from the outer edge (48) of the fuel cell (12);
flowing a coolant through at least one coolant channel (18) in the fuel cell stack assembly (10), wherein the coolant enters the fuel cell stack assembly (10) adjacent the electrolyte condensation zone (58); and
condensing out electrolyte that has evaporated into the reactant stream at the electrolyte condensation zone (58).

5. The method according to claim 4, wherein the electrolyte is phosphoric acid.

6. The method according to claim 4, wherein the electrolyte is a free acid contained within a fuel cell having a high temperature electrolyte membrane (20).

7. The method according to claim 4, wherein there is a greater number of coolant channels (18) in the area adjacent the electrolyte condensation zone (58) than adjacent a reactive portion of the fuel cell (12).

## Patentansprüche

1. Brennstoffzelle (12) aufweisend:
einen Elektrolyten;
eine Kathodenelektrode (28) und eine Anodenelektrode (26);
eine Kathodenkatalysatorschicht (36) und eine Anodenkatalysatorschicht (30);
eine mindestens einem Reaktionsmittelausgang (59) benachbarte Elektrolyt-Kondensationszone (58), die betriebswirksam ist, Elektrolyt, der in die Reaktionsmittelströmung verdampft ist, zur Rückabsorption in die Brennstoffzelle auszukondensieren; und
mindestens einen Kühlmittelkanal (18);
wobei
ein Ende (54) der Anodenkatalysatorschicht (30) von 1,8 bis 3,6 cm von einem Außenrand (48) der Brennstoffzelle (12) entfernt ist;
ein Ende (56) einer Kathodenkatalysatorschicht (36) von 5,1 bis 12,7 cm von dem Außenrand (48) der Brennstoffzelle (12) entfernt ist;
die Elektrolyt-Kondensationszone (58) den Bereich, der sich von dem Ende (56) der Kathodenkatalysatorschicht (36) zu dem Außenrand (48) der Brennstoffzelle (12) erstreckt, aufweist; und
der mindestens eine Kühlmittelkanal (18) den Kühlmitteleingang nahe an der Elektrolyt-Kondensationszone (58) hat.

2. Brennstoffzelle nach Anspruch 1, bei der der Elektrolyt Phosphorsäure ist.

3. Brennstoffzelle nach Anspruch 1, bei der der Elektrolyt eine freie Säure ist, die in einer Brennstoffzelle mit einer Hochtemperatur-Elektrolytmembran (20) enthalten ist.

4. Verfahren zum Betreiben einer Brennstoffzellen-Stapelanordnung (10) mit mindestens einer Brennstoffzelle (12) und einen Elektrolyten enthaltend, aufweisend:
Strömen eines Oxidationsmittels durch eine einer Kathodenelektrode (28) benachbarte Kathodenströmungsfeldplatte (40), wobei die Kathodenelektrode eine Kathodenkatalysatorschicht (36), die ein Ende (56) aufweist, hat und
eine mindestens einem Reaktionsmittelausgang (59) benachbarte Elektrolyt-Kondensationszone (58) hat, die den Bereich, der sich von dem Ende (56) der Kathodenkatalysatorschicht (36) zu dem Außenrand (48) der Brennstoffzelle (12) erstreckt, aufweist, wobei das Ende (56) der Kathodenkatalysatorschicht (36) von 5,1 bis 12,7 cm von dem Außenrand (48) der Brennstoffzelle (12) entfernt ist;
Strömen eines Brennstoffs durch eine einer Anodenelektrode (26) mit einer Anodenkatalysatorschicht (30) benachbarte Anodenströmungsfeldplatte (32),
wobei die Anodenkatalysatorschicht ein Ende (54) hat, das mit einem Nassdichtungs-Innenrand (53) der Brennstoffzelle zusammenfällt, oder sich bis zur Hälfte über die Randdichtung erstreckt, wobei das Ende (54) der Anodenkatalysatorschicht (30) von 1,8 bis 3,6 cm von dem Außenrand (48) der Brennstoffzelle (12) entfernt ist;
Strömen eines Kühlmittels durch mindestens einen Kühlmittelkanal (18) in der Brennstoffzellen-Stapelanordnung (10), wobei das Kühlmittel nahe an der Elektrolyt-Kondensationszone (58) in die Brennstoffzellen-Stapelanordnung (10) eintritt; und
Auskondensieren von Elektrolyt, der in die Reaktionsmittelströmung hinein verdampft ist, an der Elektrolytkondensationszone (58).

5. Verfahren nach Anspruch 4, bei dem der Elektrolyt Phosphorsäure ist.

6. Verfahren nach Anspruch 4, bei dem der Elektrolyt eine freie Säure ist, die in einer Brennstoffzelle mit einer Hochtemperatur-Elektrolytmembran (20) enthalten ist.

7. Verfahren nach Anspruch 4, bei dem es in dem Bereich nahe an der Elektrolyt-Kondensationszone (58) eine größere Anzahl an Kühlmittelkanälen (18) gibt als nahe einem reaktiven Teil der Brennstoffzelle (12).

## Revendications

1. Pile à combustible (12) comprenant :
un électrolyte ;
une électrode de cathode (28) et une électrode d'anode (26) ;
une couche de catalyseur de cathode (36) et une couche de catalyseur d'anode (30) ;
une zone de condensation d'électrolyte (58) adjacente à au moins une sortie de réactif (59), utilisable pour condenser l'électrolyte, qui s'est évaporé dans le flux de réactif, pour la réabsorption dans la pile de combustible ; et
au moins un canal de réfrigérant (18) ;
dans lequel
une extrémité (54) de la couche de catalyseur d'anode (30) est située de 1,8 à 3,6 cm à partir d'un bord externe (48) de la pile de combustible (12) ;
une extrémité (56) d'une couche de catalyseur de cathode (36) est située de 5,1 à 12,7 cm à partir du bord externe (48) de la pile de combustible (12) ;
une zone de condensation d'électrolyte (58) est comprise de la zone s'étendant à partir de l'extrémité (56) de la couche de catalyseur de cathode (36) jusqu'au bord externe (48) de la pile de combustible (12) ; et
le au moins un canal réfrigérant (18) présente l'entrée réfrigérante agencéd de façon adjacente à la zone de condensation d'électrolyte (58).

2. Pile à combustible selon la revendication 1, dans laquelle l'électrolyte est de l'acide phosphorique.

3. Pile à combustible selon la revendication 1, dans laquelle l'électrolyte est un acide libre contenu dans une pile à combustible ayant une membrane d'électrolyte à température élevée (20).

4. Procédé de fonctionnement d'un ensemble d'empilage de pile à combustible (10) ayant au moins une pile à combustible (12) et contenant un électrolyte, comprenant :
l'écoulement d'un oxydant à travers une plaque de champ de flux de cathode (40) adjacente à une électrode de cathode (28), l'électrode de cathode ayant une couche de catalyseur de cathode (36) comprenant une extrémité (56), et ayant une zone de condensation d'électrolyte (58) adjacente à au moins une sortie de réactif (59), qui est comprise de la zone s'étendant à partir de l'extrémité (56) de la couche de catalyseur de cathode (36) jusqu'au bord externe (48) de la pile à combustible (12), dans lequel l'extrémité (56) de la couche de catalyseur de cathode (36) est située de 5,1 à 12,7 cm à partir du bord externe (48) de la pile de combustible (12) ;
l'écoulement d'un combustible à travers une plaque de champ de flux d'anode (32) adjacente à une électrode d'anode (26) ayant une couche de catalyseur d'anode (30), la couche de catalyseur d'anode ayant une extrémité (54) coïncidant avec un bord interne de scellement humide (53) de la pile à combustible, ou s'étendant jusqu'à mi-chemin à travers le scellement de bord, dans lequel l'extrémité (54) de la couche de catalyseur d'anode (30) est située de 1,8 à 3,6 cm à partir du bord externe (48) de la pile à combustible (12) ;
l'écoulement d'un réfrigérant à travers au moins un canal de réfrigérant (18) dans l'assemblage d'empilement de pile à combustible (10), dans lequel le réfrigérant pénètre dans l'assemblage d'empilement de pile à combustible (10) adjacent à la zone de condensation d'électrolyte (58) ; et
la condensation de l'électrolyte qui s'est évaporée dans le flux de réactif sur la zone de condensation d'électrolyte (58).

5. Procédé selon la revendication 4, dans lequel l'électrolyte est de l'acide phosphorique.

6. Procédé selon la revendication 4, dans lequel l'électrolyte est un acide libre contenu dans une pile à combustible ayant une membrane d'électrolyte à température élevée (20).

7. Procédé selon la revendication 4, dans lequel il y a un nombre plus grand de canaux de réfrigérant (18) dans l'aire adjacente à la zone de condensation d'électrolyte (58) que dans celle adjacente à une partie réactive de la pile à combustible (12).
